# EUROPEAN PATENT APPLICATION

(11) **EP 3 086 553 A1**
(43) Date of publication of application: **26.10.2016**
(21) Application number: 16160665.2
(22) Date of filing: 16.03.2016
(51) Int. Cl.: H04N 9/43, H04N 9/74, G06T 5/50

(54) **METHOD AND APPARATUS FOR IMAGE COLORIZATION**

(30) Priority: 20.04.2015 EP 15305589
(71) Applicant: Thomson Licensing, 92130 Issy-les-Moulineaux (FR)
(72) Inventor: Hoerentrup, Jobst, 30974 Wennigsen (DE); Schlosser, Markus, 76137 Karlsruhe (DE)
(74) Representative: Huchet, Anne

(57) **Abstract**

A method and an apparatus for image colorization are described. A first image obtaining unit obtains (10) an original image. A second image obtaining unit obtains (11) an auxiliary image comprising information about target colors for pixels of the original image. A Guided Image Filter then filters (12) the auxiliary image using the original image as a Guiding Image to generate an output image.

## Description

### FIELD

The present principles relate to a method and an apparatus for image colorization, and more specifically to a method and an apparatus for image colorization using an auxiliary image.

### BACKGROUND

In the field of image colorization two different types of color correction are discerned. In contrast to primary color correction, which generally affects the whole image, secondary color correction aims to correct the colors in only a subregion of the image. This process is widely deployed in the movie industry.

In [1] a method for (re-) colorization of images is described. The method is based on the assumption that two neighboring pixels should receive similar colors when their intensities/original colors are similar. Although this approach yields results of high quality, the employed global optimization method yields a large, sparse system of linear equations that is computation intensive to solve.

A method for (re-) colorization of images based on a fast edge-preserving smoothing filtering approach is described in [2]. The filtering method basically only works for one-dimensional signals. Two-dimensional images need to be processed iteratively by alternating between horizontal and vertical filtering steps. Such an iterative approach does not work satisfactory if there are thin structures present in the image, like, for example, hair or fur. Furthermore, strong edges, no matter how thin they are, or even just outliers or noise, block the filtering completely. For some applications, this behavior is desirable, but not for others.

### SUMMARY

The present principles relate to a solution for image colorization using an auxiliary image.

According to one aspect of the present principles, a method for image colorization comprises:
- obtaining an original image;
- obtaining an auxiliary image, wherein the auxiliary image comprises information about target colors for pixels of the original image; and
- filtering the auxiliary image with a Guided Image Filter using the original image as a Guiding Image to generate an output image.

Accordingly, a computer readable storage medium has stored therein instructions enabling image colorization, which when executed by a computer, cause the computer to:
- obtain an original image;
- obtain an auxiliary image, wherein the auxiliary image comprises information about target colors for pixels of the original image; and
- filter the auxiliary image with a Guided Image Filter using the original image as a Guiding Image to generate an output image.

The computer readable storage medium is a non-transitory volatile or non-volatile storage medium, such as, for example, but not limited to, a hard disk, an optical or magnetic disk or tape, a solid state memory device, etc. The storage medium thus tangibly embodies a program of instructions executable by a computer or a processing device to perform program steps as described herein.

Also, in one embodiment, an apparatus for image colorization comprises:
- a first image obtaining unit configured to obtain an original image;
- a second image obtaining unit configured to obtain an auxiliary image, wherein the auxiliary image comprises information about target colors for pixels of the original image; and
- a Guided Image Filter configured to filter the auxiliary image using the original image as a Guiding Image to generate an output image.

In another embodiment, an apparatus for image colorization comprises a processing device and a memory device having stored therein instructions, which, when executed by the processing device, cause the apparatus to:
- obtain an original image;
- obtain an auxiliary image, wherein the auxiliary image comprises information about target colors for pixels of the original image; and
- filter the auxiliary image with a Guided Image Filter using the original image as a Guiding Image to generate an output image.

One goal of the present solution is to colorize or re-colorize the object of interest under preservation of its (potentially fine) structures. A unique feature of the Guided Image Filter [3] is its "structure transfer" capability; i.e. the ability to transfer structures (color gradients) from the Guiding Image to the filter output. Therefore, a Guided Image Filter, preferably a Confidence-Aware Guided Image Filter [4], is used for (re-)colorization of images. In the process according to the present principles, the original image serves as the Guiding Image, while an additional auxiliary image is filtered, which contains information about the desired new color(s). In particular, the auxiliary image comprises information about a first type of pixels, for which a target color is specified, and a second type of pixels, for which no target color is specified. The auxiliary image may be a user-modified version of the original image.

The present solution is particularly suited for cases where the color of the object of interest, e.g. a foreground object, mixes with its surrounding, e.g. the background. This is typically the case for objects with fine structures, like hair or fur. For such cases the present solution outperforms the state of the art approaches mentioned above.

In one embodiment, for the first type of pixels, the target color of a pixel is one of the color of the pixel in the original image and a new color. There is no constraint on the target color, i.e. it can be different from or identical to the original color.

In case of a Confidence-Aware Guided Image Filter, a confidence or weight of '0' is assigned to a pixel without a specified target color and a confidence or weight equal to or larger than '0' is assigned to a pixel with a specified target color. In this way the per-pixel weights or confidences are set such that local linear models of the filter are learnt from the desired colors.

In one embodiment, a confidence larger than '0' is assigned to a pixel having the color of the pixel in the original image as a specified target color if a distance of the pixel to another pixel without a specified target color is smaller than a distance threshold. For the set of specified pixels that carry their original color, only pixels at a distance to an unspecified pixel smaller than some distance threshold obtain an additional weight greater than '0', while all other weights are set to '0'. This excludes pixels further away from the unspecified region from the learning process in the filter, which may otherwise mislead the local linear models.

In one embodiment, a refined auxiliary image is generated by:
- generating a trimap from the auxiliary image;
- generating an alpha matte from the original image and the trimap; and
- assigning target colors to pixels of the auxiliary image without a specified target color based on the alpha matte.
Once the alpha matte has been obtained, a number of unspecified pixels may be converted into specified ones. Use of the refined auxiliary image allows further improving the outcome of the colorization process.

In one embodiment, assigning target colors to pixels of the auxiliary image without a specified target color based on the alpha matte comprises:
- assigning the color of the pixel in the original image as a specified target color to a pixel if an alpha value for the pixel is smaller than a lower alpha threshold; and
- assigning the new color as a specified target color to a pixel if the alpha value for the pixel is larger than an upper alpha threshold.
The lower alpha threshold may be in the vicinity of '0' and the upper alpha threshold may be in the vicinity of '1'. This process reduces the size of the unspecified region by pre-classifying pixels according to their estimated opacity.

The present principles further relate to a solution for generating an auxiliary image for an image colorization process.

According to a further aspect of the present principles, a method for generating an auxiliary image for an image colorization process comprises:
- displaying an original image to a user;
- receiving a first user input determining a first region of the original image for which a target color is unspecified;
- receiving a second user input determining a target color for a second region of the original image; and
- generating an auxiliary image from the original image and the first and second user inputs.

Accordingly, a computer readable storage medium has stored therein instructions enabling generating an auxiliary image for an image colorization process, which when executed by a computer, cause the computer to:
- display an original image to a user;
- receive a first user input determining a first region of the original image for which a target color is unspecified;
- receive a second user input determining a target color for a second region of the original image; and
- generate an auxiliary image from the original image and the first and second user inputs.

Also, in one embodiment, an apparatus for generating an auxiliary image for an image colorization process comprises:
- a display configured to display an original image to a user;
- a user interface configured to receive a first user input determining a first region of the original image for which a target color is unspecified and to receive a second user input determining a target color for a second region of the original image; and
- an image generator configured to generate an auxiliary image from the original image and the first and second user inputs.

In another embodiment, an apparatus for generating an auxiliary image for an image colorization process comprises a processing device and a memory device having stored therein instructions, which, when executed by the processing device, cause the apparatus to:
- display an original image to a user;
- receive a first user input determining a first region of the original image for which a target color is unspecified;
- receive a second user input determining a target color for a second region of the original image; and
- generate an auxiliary image from the original image and the first and second user inputs.

According to this further aspect of the present principles a special type of auxiliary image is generated, which is particularly suited for secondary color correction, i.e. (re-)colorization of individual objects. The auxiliary image distinguishes between different types of image regions. For pixels in one image region the target color is unspecified and to be computed. For pixels in another image region the target color is specified.

### BRIEF DESCRIPTION OF THE DRAWINGS

- Fig. 1: schematically illustrates an embodiment of a method for image colorization;
- Fig. 2: schematically depicts one embodiment of an apparatus for image colorization according to the present principles;
- Fig. 3: schematically illustrates another embodiment of an apparatus for image colorization according to the present principles;
- Fig. 4: shows an exemplary original image prior to the colorization process;
- Fig. 5: depicts an exemplary auxiliary image used in the colorization process;
- Fig. 6: shows an image resulting from the colorization process;
- Fig. 7: illustrates a method for generating a refined auxiliary image;
- Fig. 8: depicts an alpha matting trimap derived from the auxiliary image of Fig. 5;
- Fig. 9: shows an alpha matte derived from the original image and the alpha matting trimap;
- Fig. 10: depicts a refined auxiliary image derived from the initial auxiliary image, the original image, and the alpha matte,
- Fig. 11: shows an image resulting from the colorization process using the refined auxiliary image;
- Fig. 12: shows an exemplary grayscale original image;
- Fig. 13: depicts color scribbles provided by a user as an auxiliary image for the colorization process;
- Fig. 14: shows the image resulting from the colorization process;
- Fig. 15: schematically illustrates an embodiment of a method for generating an auxiliary image for an image colorization process;
- Fig. 16: schematically depicts one embodiment of an apparatus for generating an auxiliary image for an image colorization process according to the present principles; and
- Fig. 17: schematically illustrates another embodiment of an apparatus for generating an auxiliary image for an image colorization process according to the present principles.

### DETAILED DESCRIPTION OF PREFERED EMBODIMENTS

For a better understanding of the principles, example embodiments are explained in more detail in the following description with reference to the figures. It is understood that the present solution is not limited to these exemplary embodiments and that specified features can also expediently be combined and/or modified without departing from the scope of the present principles as defined in the appended claims.

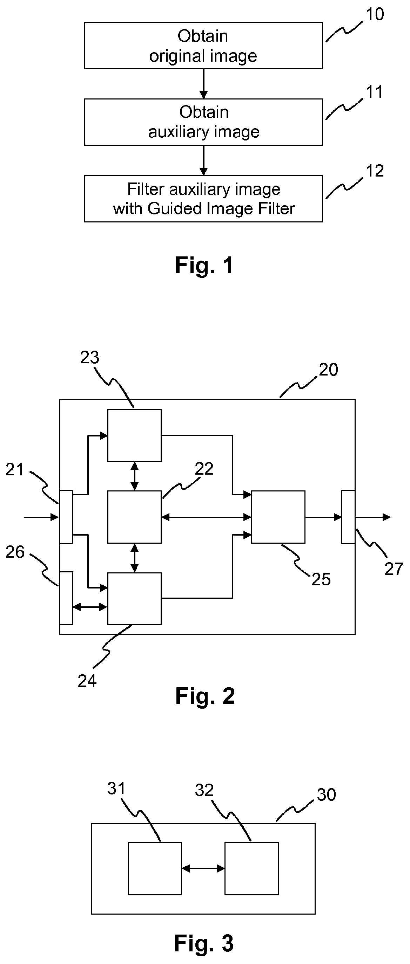

Fig. 1 schematically illustrates one embodiment of a method for image colorization. After obtaining 10 an original image also an auxiliary image is obtained 11. The auxiliary image comprises information about target colors for pixels of the original image. The auxiliary image is then filtered 12 with a Guided Image Filter using the original image as a Guiding Image to generate an output image.

One embodiment of an apparatus 20 for image colorization according to the present principles is schematically depicted in Fig. 2. The apparatus 20 has a first image obtaining unit 23 for obtaining 10 an original image, e.g. from a network or an external storage system via an input 21, or from a local storage unit 22. A second image obtaining unit 24 obtains 11 an auxiliary image comprising information about target colors for pixels of the original image. Also the auxiliary image may be obtained from the network or the external storage system via the input 21, or from the local storage unit 22. Alternatively, the auxiliary image may be obtained from a user via a user interface 26. A Guided Image Filter 25 filters 12 the auxiliary image using the original image as a Guiding Image to generate an output image. The colorized image is preferably made available via an output 27. It may also be stored on the local storage unit 22. The output 27 may also be combined with the input 21 into a single bidirectional interface. Each of the different units 23, 24, 25 can be embodied as a different hardware unit. Of course, the different units 23, 24, 25 may likewise be fully or partially combined into a single unit or implemented as software running on a processor.

Another embodiment of an apparatus 30 for image colorization according to the present principles is schematically illustrated in Fig. 3. The apparatus 30 comprises a processing device 31 and a memory device 32 storing instructions that, when executed, cause the apparatus to perform steps according to one of the described methods.

For example, the processing device 31 can be a processor adapted to perform the steps according to one of the described methods. In an embodiment according to the present principles, said adaptation comprises that the processor is configured, e.g. programmed, to perform steps according to one of the described methods.

A processor as used herein may include one or more processing units, such as microprocessors, digital signal processors, or a combination thereof.

The local storage unit 22 and the memory device 32 may include volatile and/or non-volatile memory regions and storage devices such as hard disk drives and DVD drives. A part of the memory is a non-transitory program storage device readable by the processing device 31, tangibly embodying a program of instructions executable by the processing device 31 to perform program steps as described herein according to the present principles.

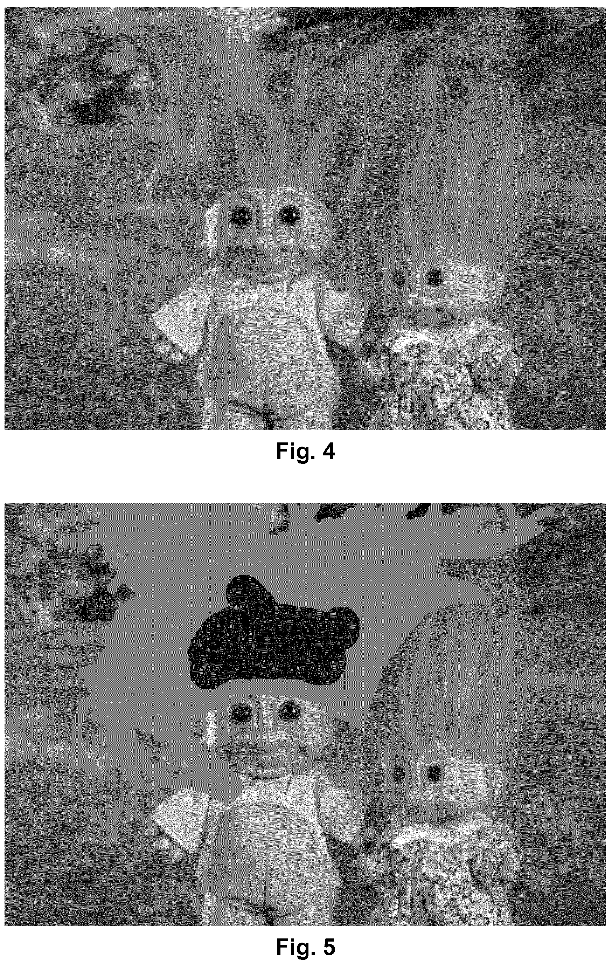

According to the present principles, an auxiliary image is used for an image colorization process applied to an original image. One exemplary original image is depicted in Fig. 4. The auxiliary image distinguishes between two types of pixels. For the first type of pixels, the target color is specified. There is no constraint on the target color, i.e. it can be different from or identical to the original color. For the second type of pixels, the target color is unspecified and to be computed.

One example of an auxiliary image, which is commonly used also in other application scenarios, is the original image overlaid with scribbles provided by the user. In this case, the scribbled pixels carry the specified color, while all remaining pixels are unspecified.

A different, rather uncommon example of an auxiliary image that is particularly useful for the present purpose is shown in Fig. 5. In this case, for the set of medium-gray pixels, the new color is unspecified. For the remaining pixels, the target color is specified, either by a new color (dark blue, appearing black in Fig. 5), or the same color as in the original image. For the application of secondary color correction, which aims at correcting the colors of a single object of interest, this type of auxiliary image can efficiently be created by the help of a software application with a painting user interface.

For the filtering method itself, it is not relevant what type of auxiliary image is actually being used. It is sufficient if the auxiliary image distinguishes between the two types of pixels.

The present principles do not aim to alter the luminance of the original image. Therefore, a color model that represents each color by a luminance value together with two color values is used. Two such examples are the YC_{b}Cᵣ and the CIE Lab color models. The luminance channel of the original image may be adopted for the output image.

Each color channel of the auxiliary image is filtered by a Guided Image Filter or a Confidence-Aware Guided Image Filter. In this process, the original image serves as the guiding image. In contrast to most other image processing filters, the output of the Guided Image Filter [3, 4] is not a direct function of the filter input, but of a third image, the guiding image. Note the distinction between the "filter input", which is the image containing the user input, and the "original image", which will serve as the guiding image. For each input pixel to be filtered, an individual linear transformation function is computed. The function parameters are learnt by minimizing the squared error between the filter input and the filter output using linear regression. The transformation is finally used to turn a pixel's color in the guiding image into the filter output. The goal of the present solution is to re-colorize the object of interest under preservation of its (potentially fine) structures. Therefore, the Guided Image Filter is ideally suited for the desired color transformation. The local linear models may be learned by considering the colors of pixels for which the target color is specified, e.g. by user scribbles. The models are then applied for assigning new colors to the set of unspecified pixels.

A remaining question is how to set the additional per-pixel weights supported by the filter, i.e. the "confidence". In one embodiment, these weights are set to '0' for pixels with an unspecified target color. Pixels with a specified target color may generally obtain a larger weight, e.g. a weight of '1'. In one embodiment, for the set of specified pixels that carry their original color, only pixels at a distance to an unspecified pixel smaller than some distance threshold obtain an additional weight greater than '0', while all other weights are set to '0'. This excludes pixels further away from the unspecified region from the learning process in the filter, which may otherwise mislead the local linear models. During the filtering, a local window should not cover only pixels with an additional per-pixel weight of 0. This can be avoided by choosing a sufficiently large filter kernel. Additionally, a small value of ε instead of 0 can be used for the weights.

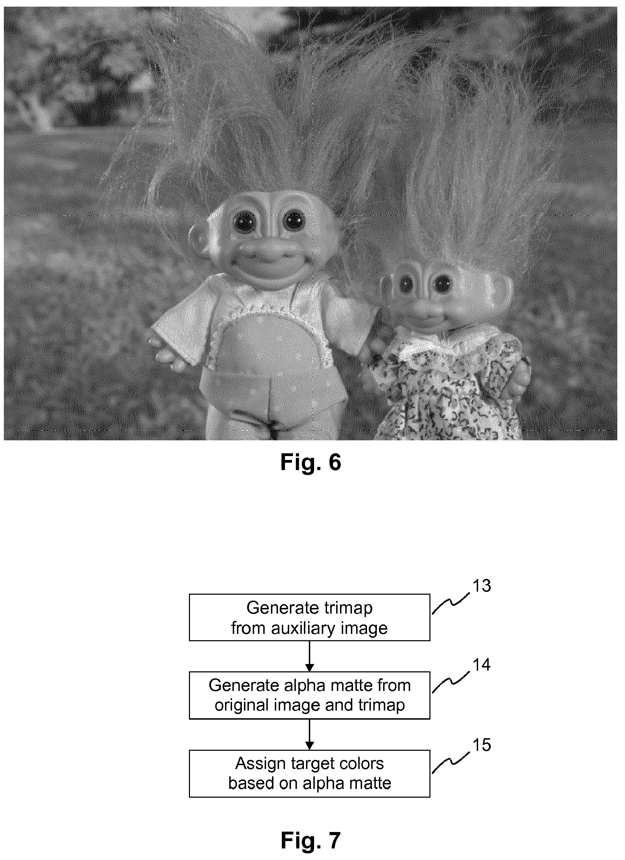

Fig. 6 shows the result of the present solution applied to the original image of Fig. 4. As can be seen, the reddish color of the hair of the left puppet (appearing in grey in Fig. 4) has successfully been transformed into a bluish tone (appearing slightly darker in Fig. 4). Fine structures are preserved. Color mixes between the greenish background and the reddish foreground are now mixes with the bluish foreground.

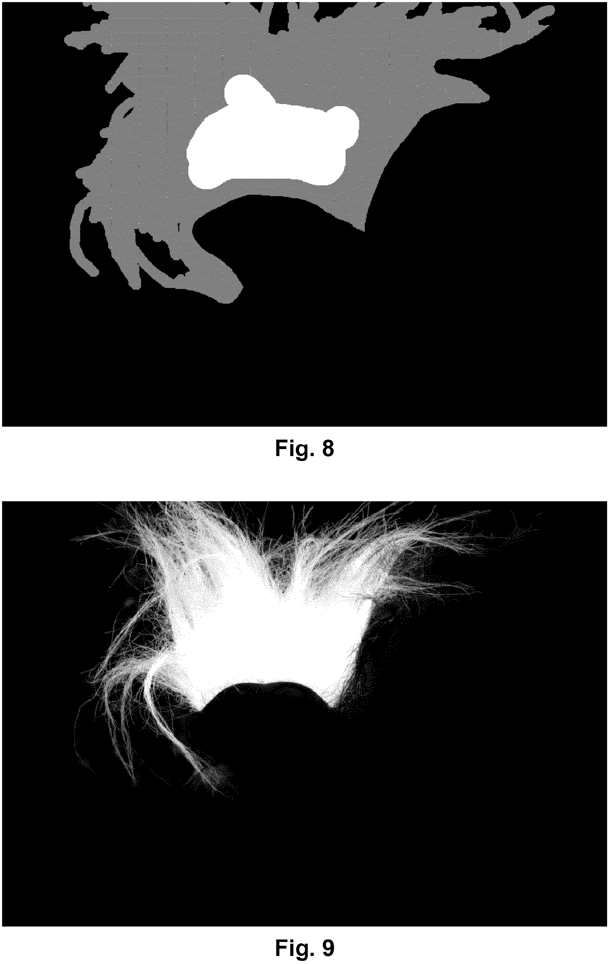

In one embodiment, the user scribbles are extended into the unspecified region in a pre-processing step as shown in Fig. 7. From the auxiliary image as shown in Fig. 5, an alpha matting trimap is generated 13. This alpha matting trimap is depicted in Fig. 8. The blue color scribble on the object of interest is transformed into white, indicating the foreground region of the trimap. The unspecified pixels maintain their gray color, indicating the "unknown region" of the trimap. The colors for the rest of the pixels are set to black, indicating the background region of the trimap. From the original image and the trimap, an alpha matte is computed 14 by an alpha matting process, e.g. the Global Matting described in [5]. The resulting alpha matte is shown in Fig. 9.

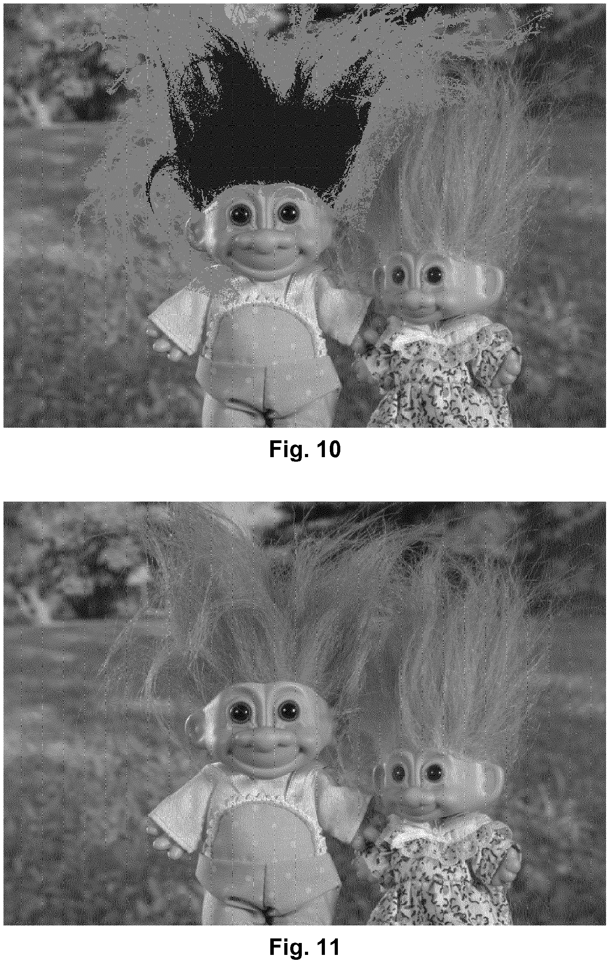

Returning to Fig. 7, once the alpha matte has been obtained 14, a number of unspecified pixels may be converted into specified ones by assigning 15 colors as follows. Unspecified pixels with an alpha value greater than an upper alpha threshold value are assigned the desired target color for the object of interest. Unspecified pixels with an alpha value smaller than a lower alpha threshold value are assigned the original color in the input image. The upper threshold is typically a value in the vicinity of '1', whereas the lower threshold is typically a value in the vicinity of '0'. This process reduces the size of the unspecified region by pre-classifying pixels according to their estimated opacity. The result of such an assignment is shown in Fig. 10. As can be seen the bluish region (appearing black in Fig. 10) has grown, whereas the background has propagated into the unspecified region.

Fig. 11 shows the corresponding resulting re-colored image. Compared with Fig. 6, some outer strands are assigned a more saturated bluish color tone. In Fig. 6, some bluish color propagated into the skin above the troll's eyes. This effect has been reduced significantly.

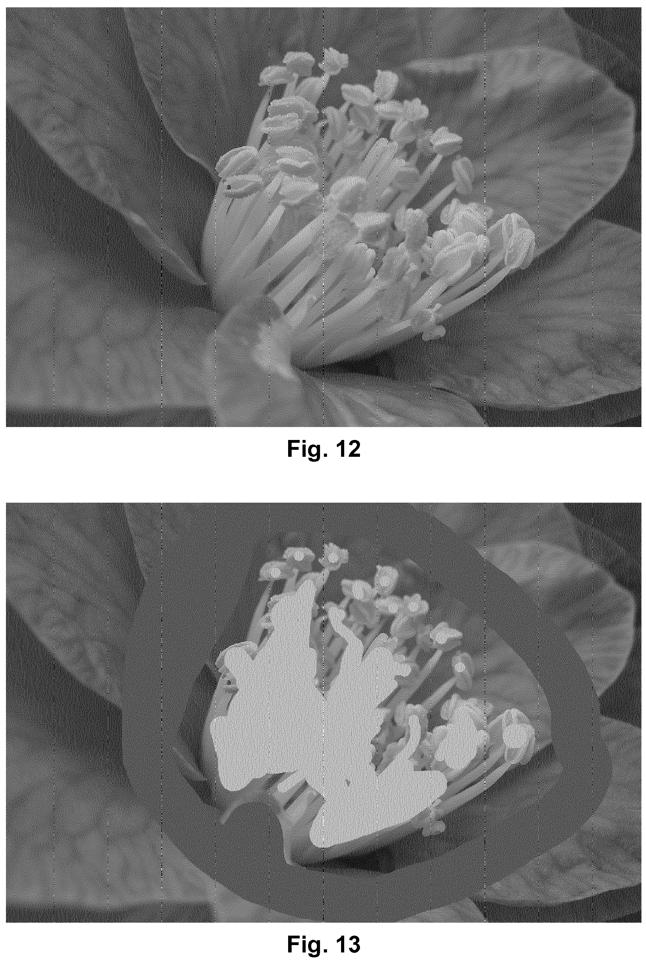

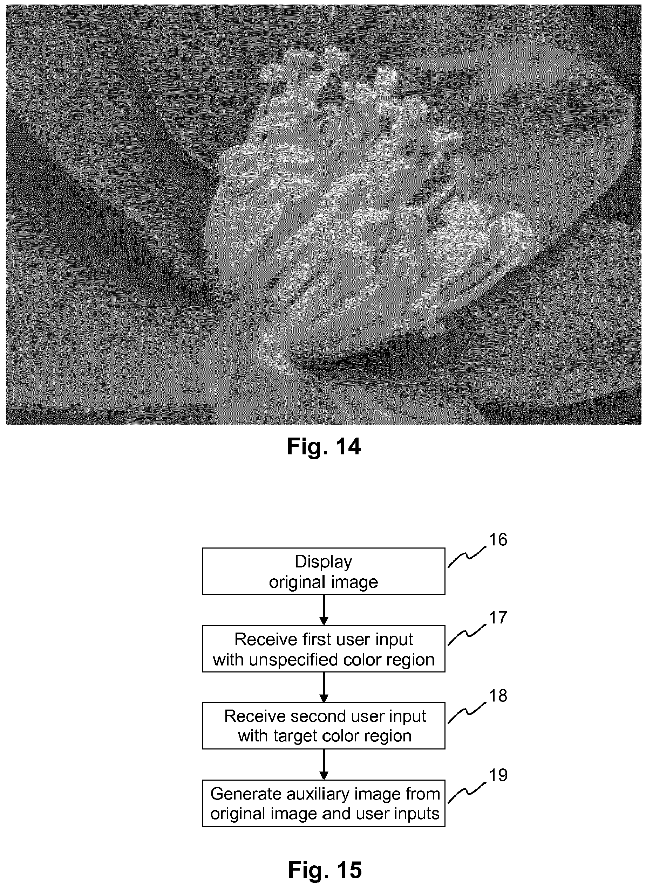

The present solution can also be applied for colorization of grayscale images. Fig. 12 shows an exemplary grayscale original image. Fig. 13 depicts color scribbles provided by the user. Fig. 14 shows the image resulting from the colorization process. The present solution computes local linear models that transform a gray value into a color channel value. For two pixels of the same gray value that are spatially close to each other, the method cannot transform these into very different colors, even if desired by the user, and even if the two pixels were separated by some (strong) edge. This is because the linear models are computed from a local neighborhood defined by a square window centered at the pixel. When two pixels are spatially close to each other, their associated local windows have a large overlap, making their associated linear models similar to each other. The same gray value of the two pixels is then transformed into a similar color. Therefore, the solution works best if the distribution of the gray values of the object of interest does not locally overlap with the distribution of the surroundings.

Fig. 15 schematically illustrates one embodiment of a method for generating an auxiliary image for an image colorization process. After displaying 16 an original image to a user a first user input is received 17, which determines a first region of the original image for which a target color is unspecified. A second user input that is received 18 determines a target color for a second region of the original image. An auxiliary image is then generated 19 from the original image and the first and second user inputs.

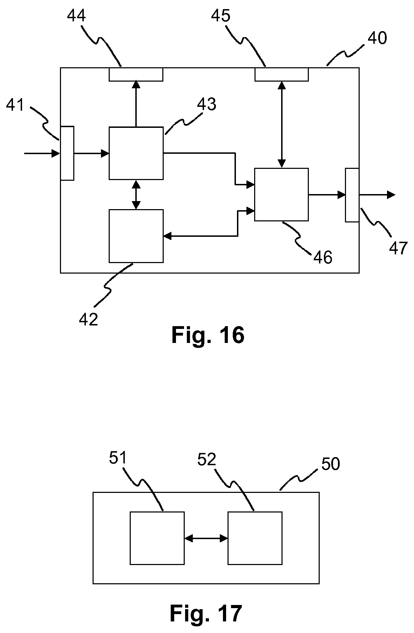

One embodiment of an apparatus 40 for generating an auxiliary image for an image colorization process according to the present principles is schematically depicted in Fig. 16. The apparatus 40 has an image obtaining unit 43 for obtaining an original image, e.g. from a network or an external storage system via an input 41, or from a local storage unit 42. The original image is displayed 16 to a user on a display 44. The apparatus 40 further comprises a user interface 45 for receiving 17 a first user input determining a first region of the original image for which a target color is unspecified and for receiving 18 a second user input determining a target color for a second region of the original image. An image generator 46 generates 19 an auxiliary image from the original image and the first and second user inputs. The auxiliary image is preferably made available via an output 47. It may also be stored on the local storage unit 42. The output 47 may also be combined with the input 41 into a single bidirectional interface. Each of the different units 43, 44, 45, 46 can be embodied as a different hardware unit. Of course, the different units 43, 44, 45, 46 may likewise be fully or partially combined into a single unit or implemented as software running on a processor. For example, the display 44 and the user interface 45 may be combined into an interactive display device, e.g. a touch screen.

Another embodiment of an apparatus 50 for image colorization according to the present principles is schematically illustrated in Fig. 17. The apparatus 50 comprises a processing device 51 and a memory device 52 storing instructions that, when executed, cause the apparatus to perform steps according to one of the described methods.

For example, the processing device 51 can be a processor adapted to perform the steps according to one of the described methods. In an embodiment said adaptation comprises that the processor is configured, e.g. programmed, to perform steps according to one of the described methods.

A processor as used herein may include one or more processing units, such as microprocessors, digital signal processors, or a combination thereof.

The memory device 52 may include volatile and/or non-volatile memory regions and storage devices such as hard disk drives and DVD drives. A part of the memory is a non-transitory program storage device readable by the processing device 51, tangibly embodying a program of instructions executable by the processing device 51 to perform program steps as described herein according to the present principles.

### REFERENCES

[1] Levin et al.: "Colorization using Optimization", ACM Transactions on Graphics (TOG), Vol. 23 (2004), Proceedings of ACM SIGGRAPH 2004, pp. 689-694.
[2] Gastal et al.: "Domain Transform for Edge-Aware Image and Video Processing", ACM Transactions on Graphics (TOG), Vol. 30 (2011), Proceedings of SIGGRAPH 2011, Article 69.
[3] He et al.: "Guided Image Filtering", IEEE Transactions on Pattern Analysis and Machine Intelligence, Vol. 35 (2013), pp. 1397-1409.
[4] Hörentrup et al.: "Confidence-aware Guided Image Filter", IEEE International Conference on Image Processing (ICIP) 2014, pp. 3243-3247.
[5] He et al.: "A Global Sampling Method for Alpha Matting", Proceedings of the 2011 IEEE Conference on Computer Vision and Pattern Recognition (CVPR'11) (2011), pp. 2049-2056.

## Claims

1. A method for image colorization, the method **comprising:**
- obtaining (10) an original image;
- obtaining (11) an auxiliary image, wherein the auxiliary image comprises information about target colors for pixels of the original image; and
- filtering (12) the auxiliary image with a Guided Image Filter using the original image as a Guiding Image to generate an output image.

2. The method according to claim 1, **wherein** the auxiliary image comprises information about a first type of pixels, for which a target color is specified, and a second type of pixels, for which no target color is specified.

3. The method according to claim 2, **wherein** for the first type of pixels, the target color of a pixel is one of the color of the pixel in the original image and a new color.

4. The method according to claim 2 to 3, **wherein** the Guided Image Filter is a Confidence-Aware Guided Image Filter.

5. The method according to claim 4, **wherein** a small confidence of '0' or a value in the vicinity of '0' is assigned to a pixel without a specified target color and a larger confidence of '1' or a value in the vicinity of '1' is assigned to a pixel with a specified target color.

6. The method according to claim 5, **wherein** the larger confidence is assigned to a pixel having the color of the pixel in the original image as a specified target color if and only if a distance of the pixel to another pixel without a specified target color is smaller than a distance threshold, and wherein otherwise the smaller confidence is assigned to the pixel.

7. The method according to one of claims 2 to 8, **further** comprising generating a refined auxiliary image by:
- generating (13) a trimap from the auxiliary image;
- generating (14) an alpha matte from the original image and the trimap; and
- assigning (15) target colors to pixels of the auxiliary image without a specified target color based on the alpha matte.

8. The method according to claim 7, **wherein** assigning (15) target colors to pixels of the auxiliary image without a specified target color based on the alpha matte comprises:
- assigning the color of the pixel in the original image as a specified target color to a pixel if an alpha value for the pixel is smaller than a lower alpha threshold in the vicinity of '0'; and
- assigning the new color as a specified target color to a pixel if the alpha value for the pixel is larger than an upper alpha threshold in the vicinity of '1'.

9. A computer readable storage medium having stored therein instructions enabling image colorization, which when executed by a computer, cause the computer to:
- obtain (10) an original image;
- obtain (11) an auxiliary image, wherein the auxiliary image comprises information about target colors for pixels of the original image; and
- filter (12) the auxiliary image with a Guided Image Filter using the original image as a Guiding Image to generate an output image.

10. An apparatus (20) for image colorization, the apparatus (20) **comprising:**
- a first image obtaining unit (23) configured to obtain (10) an original image;
- a second image obtaining unit (24) configured to obtain (11) an auxiliary image, wherein the auxiliary image comprises information about target colors for pixels of the original image; and
- a Guided Image Filter (25) configured to filter (12) the auxiliary image using the original image as a Guiding Image to generate an output image.

11. An apparatus (30) for image colorization, the apparatus (30) comprising a processing device (31) and a memory device (32) having stored therein instructions, which, when executed by the processing device (31), cause the apparatus (30) to:
- obtain (10) an original image;
- obtain (11) an auxiliary image, wherein the auxiliary image comprises information about target colors for pixels of the original image; and
- filter (12) the auxiliary image with a Guided Image Filter using the original image as a Guiding Image to generate an output image.

12. A method for generating an auxiliary image for an image colorization process, the method comprising:
- displaying (16) an original image to a user;
- receiving (17) a first user input determining a first region of the original image for which a target color is unspecified;
- receiving (18) a second user input determining a target color for a second region of the original image; and
- generating (19) an auxiliary image from the original image and the first and second user inputs.

13. A computer readable storage medium having stored therein instructions enabling generating an auxiliary image for an image colorization process, which when executed by a computer, cause the computer to:
- display (16) an original image to a user;
- receive (17) a first user input determining a first region of the original image for which a target color is unspecified;
- receive (18) a second user input determining a target color for a second region of the original image; and
- generate (19) an auxiliary image from the original image and the first and second user inputs.

14. An apparatus (40) for generating an auxiliary image for an image colorization process, the apparatus (40) **comprising:**
- a display (44) configured to display (16) an original image to a user;
- a user interface (45) configured to receive (17) a first user input determining a first region of the original image for which a target color is unspecified and to receive (18) a second user input determining a target color for a second region of the original image; and
- an image generator (46) configured to generate (19) an auxiliary image from the original image and the first and second user inputs.

15. An apparatus (50) for generating an auxiliary image for an image colorization process, the apparatus (50) comprising a processing device (51) and a memory device (52) having stored therein instructions, which, when executed by the processing device (51), cause the apparatus (50) to:
- display (16) an original image to a user;
- receive (17) a first user input determining a first region of the original image for which a target color is unspecified;
- receive (18) a second user input determining a target color for a second region of the original image; and
- generate (19) an auxiliary image from the original image and the first and second user inputs.
